# EUROPEAN PATENT APPLICATION

(11) **EP 1 216 894 A1**
(43) Date of publication of application: **26.06.2002**
(21) Application number: 01204809.6
(22) Date of filing: 10.12.2001
(51) Int. Cl.: B60R 21/20

(54) **Instrument panel with integral hidden airbag door cover and method of in-process manufacture thereof**

(30) Priority: 21.12.2000 US 747286
(71) Applicant: Delphi Technologies, Inc., Troy, MI 48007 (US)
(72) Inventor: Skirha, Martin Dirk, Vandalia, Ohio 45377 (US); Gassman, Kenneth Alan, Springboro, Ohio 45066 (US); Patel, Sandip R., Miamisburg, Ohio 45342 (US); Shimizu, Jeffrey, Mississauga, Ontario I5M-5T6 (CA)
(74) Representative: Denton, Michael John

(57) **Abstract**

According to the present invention, an instrument panel cover (16) for use in an instrument panel (10) of a vehicle compartment (12) having a supplemental inflatable restraint (SIR) system (32) and a method for manufacturing the instrument panel cover (16) are provided. The instrument panel cover (16) includes a body having an inner surface (24) and an opposing outer surface (26), the body having an air bag cushion deployment region (18) formed in the inner surface (24) thereof, the deployment region (18) being defined by at least one score (20) formed in the inner surface (24) to a predetermined depth, wherein the at least one score (20) is formed by at least one scoring member (43) which contacts the instrument panel cover (16) during the manufacture thereof and the advancement of the at least one scoring member (43) causes the instrument panel cover (16) to thin out in predetermined locations which define the at least one score (20). Because the present invention incorporates the scoring process into the process for forming the instrument panel cover (16), the present invention advantageously eliminates the need of secondary scoring of the air bag door seam and therefore provides cost benefits and a reduction in processing and manufacturing times.

## Description

### TECHNICAL FIELD

The present invention relates generally to an instrument panel, seat, pillar, door panel or steering wheel used in a vehicle having a supplemental inflatable restraint (SIR) system, and more particularly to an instrument panel cover having an integral hidden air bag door and a method of manufacture thereof.

### BACKGROUND OF THE INVENTION

As more and more vehicles are equipped with SIR systems, other vehicle components have been modified to accommodate the use of such systems. For example, most SIR systems are disposed within and behind an instrument panel which extends across the width of a vehicle compartment. Generally, a vehicle instrument panel comprises a plurality of layers including a panel cover, a foam layer, and a substrate. The cover is typically disposed adjacent the foam layer which is disposed, correspondingly, adjacent to the substrate, thus forming the panel.

Traditionally, an instrument panel employed in a vehicle equipped with a SIR system utilizes a discrete door which covers an opening formed in the instrument panel for the air bag cushion to deploy through upon actuation of the SIR system. This separate door is designed to open in response to the force of the expanding air bag cushion. As the pressure in the air bag cushion increases, a force is generated on the door. The door then selectively separates from the remaining portion of the instrument panel to permit the air bag cushion to deploy.

Typically, the manufacture of a conventional instrument panel involves two separate processes and a final assembly step. First the instrument panel is formed in view of the shape and size of the door with an opening adjacent to the SIR system. Meanwhile, in a separate process the door is formed using techniques known in the art. Finally, the air bag door is assembled onto the instrument panel for use in conjunction with the SIR system. The plurality of steps involved in the manufacture of the conventional instrument panel consume substantial time and resources and result in an aesthetically apparent air bag door.

Recent advances in the art teach a vehicle instrument panel that utilizes a hidden deployment region integrally formed within an inner surface of the instrument panel to provide a panel of less weight and without the obvious markings of an air bag door. The deployment region of such panels comprises a plurality of scores or cuts formed in the inner surface of the instrument panel. The scores represent weakened portions of the instrument panel designed so that the force of an inflating air bag cushion causes the instrument panel to separate along the scores to thereby provide an opening for the inflating air bag cushion to deploy therethrough and be directed into the passenger compartment of a vehicle.

The manufacture of vehicle instrument panels with integrally formed hidden air bag doors typically involves three distinct processes. First, the various layers of the panel are cast using methods common in the art. Then, a blade is brought into contact with the various cast layers of the panel to melt and/or cut into the interior surface of the layers forming the scores and cuts necessary to allow deployment of the concealed air bag. Finally, the layers are adhered together in such a way as to construct the panel.

Vehicle instrument panels with integral hidden air bag doors eliminate the use of components and processes involved with the manufacture of separate air bag doors and result in a hidden deployment region that is completely concealed from observation by vehicle occupants thereby permitting the outer surface of the instrument panel cover to have a stylistically uniform appearance. However, methods of manufacturing the instrument panel typically involve a scoring process independent of the processes involved in casting the panel itself thereby introducing an additional step to the instrument panel manufacturing process which consumes time and resources better allocated to other areas in the art.

### SUMMARY OF THE INVENTION

According to the present invention, an instrument panel cover for use in an instrument panel of a vehicle compartment having a supplemental inflatable restraint (SIR) system and a method for manufacturing the instrument panel cover are provided. The instrument panel cover includes a body having an inner surface and an opposing outer surface. The body has an air bag cushion deployment region formed in the inner surface thereof. The deployment region is defined by at least one score formed in the inner surface to a predetermined depth, wherein the at least one score is formed by at least one scoring member which contacts the instrument panel cover during the manufacture thereof. More specifically, the at least one score is formed in-process during the formation of the instrument panel cover itself.

In one exemplary embodiment, the instrument panel cover is formed using a female vacuum forming tool with a plug assist. The plug is fitted with a cylinder which can be actuated in any number of ways including by air. Attached to the cylinder are at least one blade which is extendable and retractable relative to the plug so that during the forming of the instrument panel cover using the plug assist, the at least one blade may be extended into the instrument panel cover to form the at least one score. When the at least one blade is extended into the instrument panel cover, it effectively thins out the skin (instrument panel cover) to create a weakened region which comprises the air bag seam. Therefore, the at least one blade may have any number of shapes and of different patterns (e.g., V, H, U, C, Y, I, etc.) to make the desired air bag seam pattern depending upon the requirements.

According to the present invention, the cylinder is actuated immediately after the forming process while the skin (instrument panel cover) is still hot and the cylinder is lowered down to thin-out the air bag door seam. The cylinder is then retracted to its original position so that a bottom edge thereof is sub-flush with a lower surface of the plug. The skin is then cooled and demolded from the tool resulting in the at least one score being formed in the skin during the manufacture of the skin itself. The tool is ready for the next cycle. The skin formed by the vacuum process is then foamed in-place using conventional foaming techniques with a substrate (retainer), which is already thinned out for the air bad door seam. Preferably, the thinning of the retainer for the air bag door is done in the injection molding process. Accordingly, the retainer is thinned out in-process (in the injection molding) as well.

The present invention eliminates the need of a secondary operation of scoring the air bag door seam in the instrument panel skin and a finished instrument panel part is obtained from the foaming process. Other advantages are that the elimination of the secondary scoring operation is eliminated and hence a cost benefit is realized. The process can also use an in-process thinned-out retainer to eliminate the scoring of the retainer as a secondary operation as well. The process eliminates read-through of the air bag seam on the Class A surface of the instrument panel skin and hence gives a high quality part. The Class A surface of the instrument panel skin is the surface which faces the passenger compartment and is desired to be smooth and free of defects. Also, the scoring process is in-process which gives consistent seam position and depth of the seam and thus gives consistent performance.

The above-described and other features and advantages of the present invention will be appreciated and understood by those skilled in the art from the following detailed description, drawings, and appended claims.

### BRIEF DESCRIPTION OF THE DRAWINGS

The present invention will now be described, by way of example only, with reference to the accompanying drawings in which:
Figure 1 is a perspective view of an exemplary vehicle instrument panel embodying the present invention;
Figure 2 is a side elevation view of a vehicle instrument panel according to the present invention;
Figure 3 is a side elevation view of a vehicle instrument panel cover and a manufacturing device;
Figure 4A is a schematic illustration of an adjustment system of the manufacturing device of Figure 3;
Figure 4B is a schematic illustration of another embodiment of an adjustment system;
Figure 5 is a cross-sectional view of an exemplary vehicle instrument panel cover showing scoring thereof by the manufacturing device;
Figure 6 is a partial enlarged cross-sectional view of the vehicle instrument panel cover and manufacturing device of Figure 5;
Figure 7 is a partial cross-sectional view of the scoring of the vehicle instrument panel cover;
Figure 8 is a cross-sectional view of the vehicle instrument panel cover showing the score formed therein according to the present invention;
Figure 9 is a top plan view of an exemplary vehicle instrument panel embodying the present invention;
Figure 10 is a cross-sectional elevation view of the vehicle instrument panel of Figure 9 along the axis 10-10 of Figure 9;
Figure 11 is a cross-sectional elevation view of the vehicle instrument panel of Figure 3 disposed in a manufacturing device; and
Figure 12 is a cross-section view of another embodiment of the vehicle instrument panel of Figure 3 disposed in a manufacturing device.

### DETAILED DESCRIPTION OF THE INVENTION

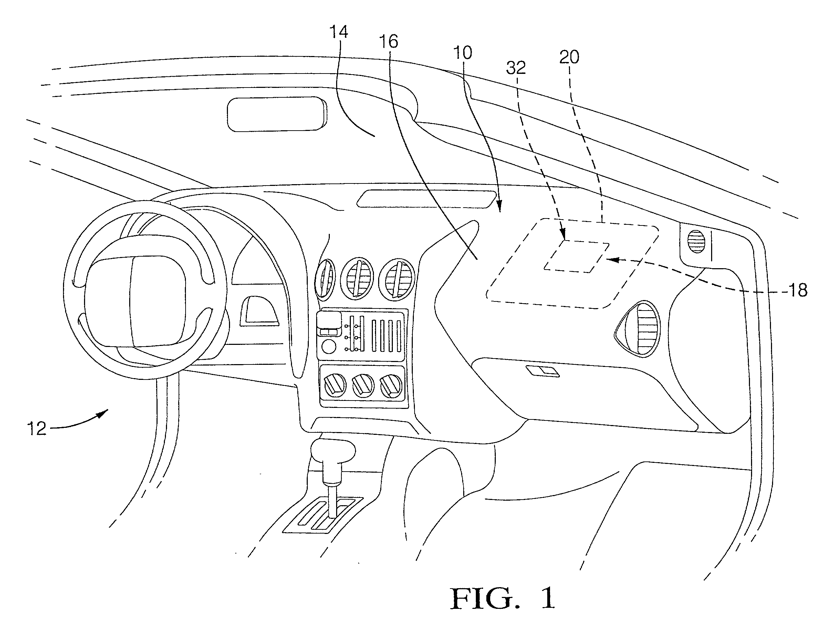

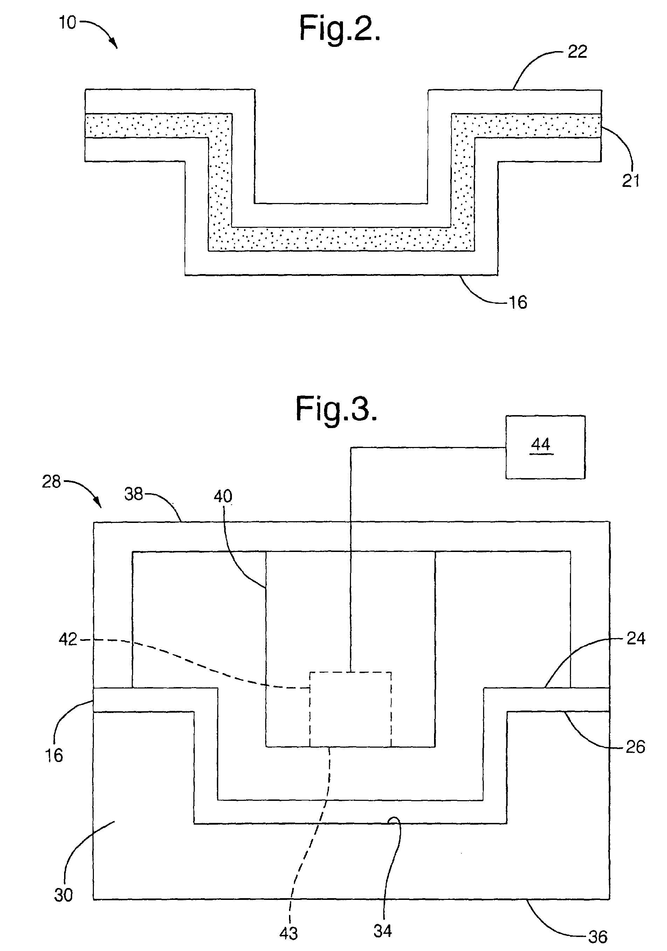

Referring to Figure 1, an instrument panel in accordance with the present invention is illustrated and generally indicated at 10. The instrument panel 10 is assembled into a vehicle passenger compartment 12 beneath a windshield 14 and extending across substantially the entire width of the passenger compartment 12. According to the present invention, and as will be described in greater detail herein, the instrument panel 10 includes an instrument panel cover 16 having a deployment region 18 formed therein, wherein the deployment region 18 is defined by a plurality of cuts or scores 20 on the interior of the panel 10. The deployment region 18 is intended to be the general area in which a passenger side SIR system (not shown) is proximately disposed thereto and deployed through during actuation thereof under predetermined deployment conditions. Figure 2 illustrates a cross-sectional view of a portion of one exemplary instrument panel 10. The instrument panel 10 includes the instrument panel cover 16 disposed adjacent to a foam layer 21 which is disposed, correspondingly, adjacent to a substrate 22.

Figure 3 illustrates the instrument panel cover 16 in a first stage prior to forming the deployment region 18 therein. The instrument panel cover 16 in the first stage includes an inner surface 24 and an outer surface 26. Accordingly, the thickness of the instrument panel cover 16 may be thought of as the distance between the inner surface 24 and the outer surface 26. The instrument panel cover 16 is formed of any number of suitable materials and, in an exemplary embodiment, the instrument panel cover 16 is formed of a thermoplastic material. For example, suitable thermoplastic materials include but are not limited to polyethylene based polyolefin elastomer or polypropylene based thermoplastic elastomer. Preferred materials are those which have the desired characteristics of strength, flexibility, and finished appearance and feel for use as an instrument panel 10. The instrument panel cover 16 is mounted in the vehicle so that the outer surface 26 is visible to a vehicle occupant and the inner surface 24 forms a contact surface for the foamed surface above air bag cushion, which is generally indicated at 32 in Figure 1. The air bag cushion 32 is part of the SIR system and is positioned so that the air bag cushion 32 is adjacent the substrate 22 of the instrument panel assembly 10.

In the first stage, represented in Figure 3, the instrument panel cover 16 is disposed in a manufacturing device 28. The device 28 is an apparatus common in the art for forming the instrument panel cover 16. The device 28 includes a vehicle instrument panel vacuum forming tool 30. The tool 30 generally acts as a mold which receives the thermoplastic material of which the cover 16 is composed. The tool 30 includes a receiving surface 34 and a mounting surface 36. The receiving surface 34 is contoured in accordance with the desired shape and size of the particular instrument panel cover 16. The receiving surface 34 receives the thermoplastic material to form the cover 16 and retains and molds the material by means of vacuum suction as is known in the art. The mounting surface 36 is generally disposed upon a casing (not shown) to facilitate use of the device 28.

The device 28 further includes a rack 38 disposed above the receiving surface 34 of the tool 30 and a plug assist 40 disposed on the rack 38 extending downward towards the receiving surface 34. The plug assist 40 facilitates in the molding of the cover 16 according to conventional techniques. The device 28 also includes a cylinder 42 disposed within the plug assist 40. The cylinder 42 includes at least one contact edge 43 for cutting or scoring the instrument panel cover 16 as described herein. The at least one contact edge 43 may have any one of a variety of cross-sectional shapes. For example, the at least one contact edge 43 may have the cross-sectional configuration of a "U", "V", or of any rectilinear or curvilinear shape. The contact edge 43 may be independent of the cylinder 42 or may be disposed integrally therewith and may be of any longitudinal shape sufficient for scoring the cover 16. Further, several contact edges 43 may be arranged on the cylinder 42 so as to form any of a variety of patterns which may be pressed into the instrument panel cover 16, as is discussed further herein. For example, a plurality of contact edges 43 may be arranged on the cylinder 42 to form an "H", "I", "O", "T", "U", "V", square, rectangle, triangle, etc.

The temperature of the cylinder 42, the at least one contact edge 43, and the plug assist 40 may each be controlled as is necessary to properly form the instrument panel cover 16 and to score the cover 16 in-process in accordance with the present invention. For instance, the temperature of the cylinder 42, the at least one contact edge 43, and the plug assist 40 each may be maintained to replicate room temperature or raised to the temperature of the instrument panel cover 16, etc. Additionally, the temperature of the cylinder 42, the at least one contact edge 43, and the plug assist 40 each may be increased to a temperature above the instrument panel cover 16.

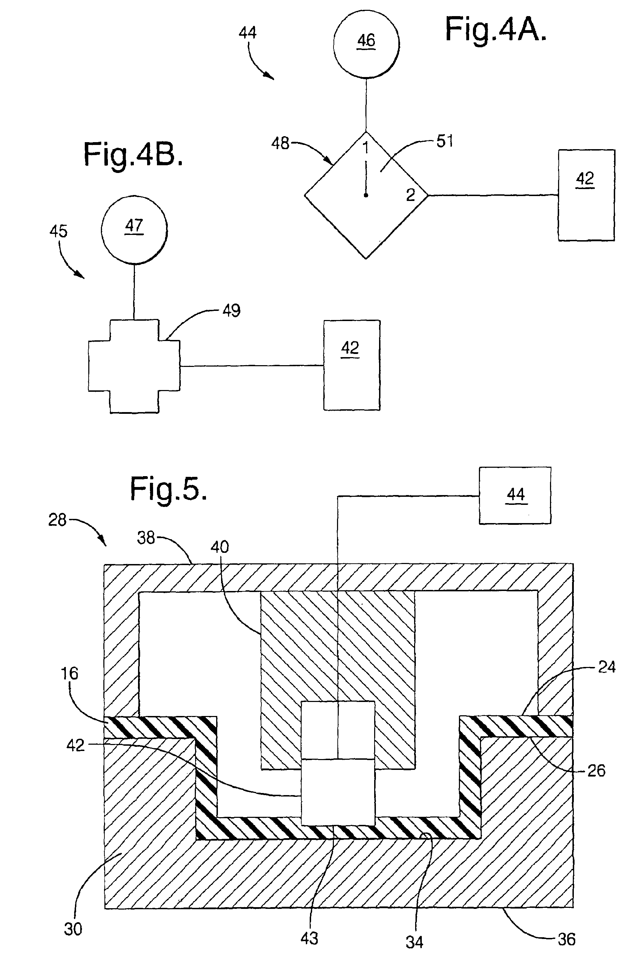

The cylinder 42 is disposed in communication with an adjustment system 44 which may be utilized by an operator or which may be actuated automatically to retract the cylinder 42 into the plug assist 40, as is shown in Figure 3, or to extend the cylinder 42 beyond the plug assist 40 thus engaging the instrument panel cover 16, as is shown in Figure 5.

Figure 4A shows a schematic representation of the adjustment system 44. In a preferred embodiment, the adjustment system 44 is pneumatically based and includes a compressed air supply 46 disposed adjacent to a selector switch 48 which is disposed communicatively with the cylinder 42. The compressed air supply 46 provides the adjustment system 44 with a predetermined pressure and volume of compressed air. The selector switch 48 includes indicia 51 corresponding to the various predetermined positions of the cylinder 42. The indicia 51 may be numerals such as 1, 2, etc.

In an alternative embodiment of the present invention, shown in Figure 4B, an adjustment system 45 may actuate automatically, without the operator, by means of a controller 49 that positions the cylinder 42 within the device 28 (Figure 3) according to a set of predetermined criteria. In such an embodiment, the adjustment system 45 may utilize an electronic, hydraulic, pneumatic means, or any other suitable means to maneuver the cylinder 42 as described above.

The method, in one embodiment of the present invention, of scoring the instrument panel cover 16 to form an integral hidden air bag door therein during the manufacturing process of the instrument panel cover 16 begins with the application of the thermoplastic material to the vacuum forming tool 30 as shown in Figure 3. The thermoplastic material is applied to the receiving surface 34 of the vacuum forming tool by conventional methods in such quantity as desired to form an instrument panel cover 16 of a predetermined thickness. The thermoplastic material is held in position and shaped atop the receiving surface 34 by suction means provided by the tool 30. The plug assist 40 is operated in accordance with the art.

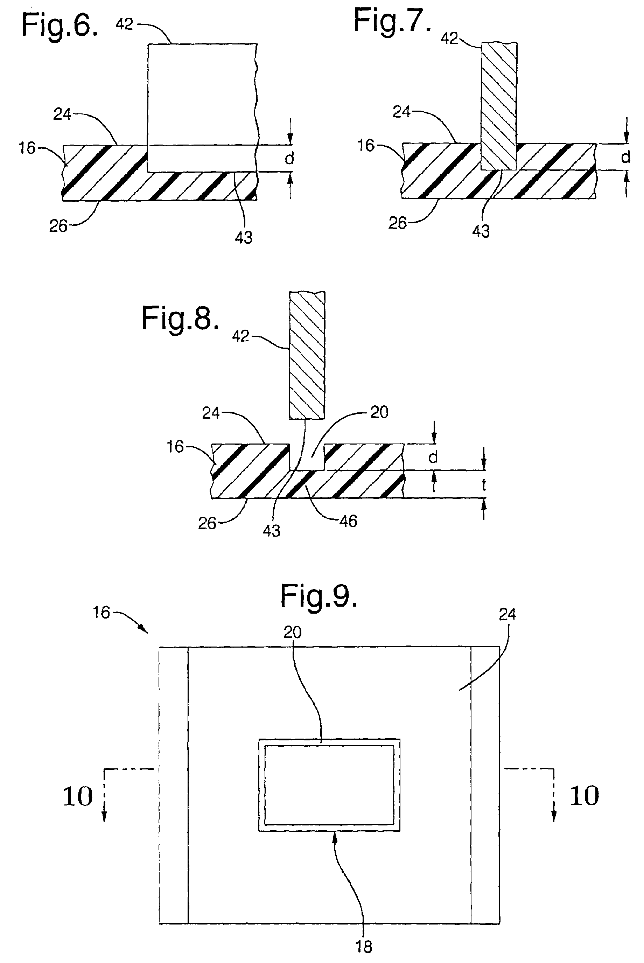

Referring to Figures 4A and 5, when desired, an operator may actuate the cylinder 42 by manipulating the selector switch 48 from a first position to a second position hence commanding the adjustment system 44 to maneuver the at least one contact edge 43 towards the inner surface 24 of the instrument panel cover 16. The at least one contact edge 43 accordingly engages the inner surface 24 of the instrument panel cover 16, passing therethrough toward the outer surface 26 a prescribed distance 'd' (see Figures 6 and 7). When desired, the operator may return the selector switch 48 to the first position causing the adjustment system 44 to retract the at least one contact edge 43 from the instrument panel cover 16 as is depicted in Figure 8. The first position and the second position may be represented by the indicia 51 and, in an exemplary embodiment, may be depicted by the numerals one (1) and two (2), respectively. It will be appreciated that contact edge 43 can be in a fixed position and not be retracted or extended if the design permits for a given application.

Referring to Figures 3 and 4B, as is mentioned above, an alternative embodiment of the invention may include the adjustment system 45 fully automated by the controller 49. In such an embodiment, the adjustment system 45 would include a monitoring means (not shown) that would monitor the device 28 and the instrument panel cover 16 for certain predetermined criteria. Upon detection of such criteria by the monitoring means, the controller 49 actuates the cylinder 42 and maneuvers it as described herein above thus scoring the instrument panel 16 in-process. Criteria upon which the controller 49 may actuate the cylinder 42 may include, for example, time, temperature of the instrument panel cover 16, temperature of the vacuum forming tool 30, etc.

Upon retracting the cylinder 42, the score 20 is formed in the instrument panel cover 16 as shown in Figure 8. The score 20 has a depth of the predetermined distance 'd' and is shaped in accordance with the cross-sectional shape of the at least one contact edge 43 of the cylinder 42 as is discussed herein above. The score 20 creates a narrowed section 46 in the instrument panel cover 16 of a predetermined thickness 't'. The thickness 't' is the distance from the inner surface 24 to the outer surface 26 of the instrument panel cover 16 less the predetermined distance 'd'. The narrowed section 46 represents a weakened portion of the instrument panel cover 16 that yields under the pressure created by an inflating air bag which deploys therethrough as discussed herein.

According to the present invention, the cylinder 42 may be actuated immediately after the forming process while the skin (instrument panel cover 16) is still hot and the cylinder 42 is lowered down and contacts the instrument panel cover 16 to thin out the air bag door seam and form the score 20. Because the scoring process is incorporated into the manufacturing of the instrument panel cover 16, the score 20 is easily formed in the instrument panel cover 16 because the skin is still hot and easily formable. Once the cylinder 42 is retracted, the instrument panel cover 16 is cooled and demolded from the device 28.

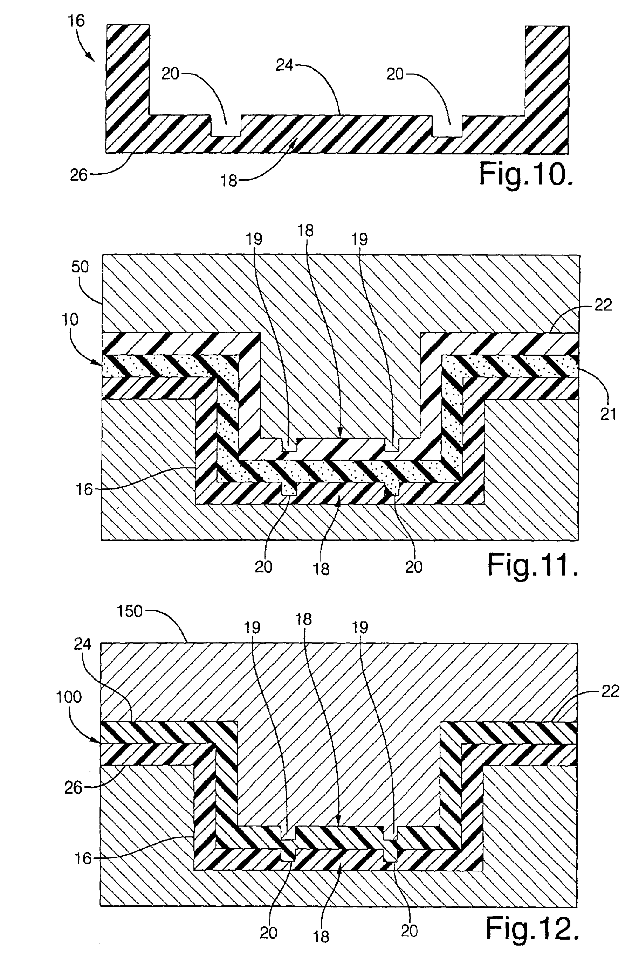

Figure 9 illustrates a top view of the instrument panel cover 16 after being scored. Several scores 20 comprise the deployment region 18. Figure 10 is a cross-sectional view of the instrument panel 16 along an axis 10-10 of Figure 9.

After forming and in-process scoring, the instrument panel cover 16 is moved into a second stage, depicted in Figure 11, wherein the instrument panel cover 16 is assembled with the foam layer 21 and the substrate 22 to form the instrument panel 10. The substrate 22 includes the deployment region 18 comprised of a plurality of scores 19. In the second stage, the instrument panel cover 16 and the substrate 22 are placed in a foaming tool 50 and foamed-in-place as is known in the art, thus adhering the instrument panel cover 16 to the foam layer 21 and the foam layer 21 to the substrate 22 to form the instrument panel 10. Once assembled, the instrument panel 10 is then removed from the foaming tool 50 and installed adjacent the air bag 32 in the vehicle compartment 12 of the vehicle as shown in Figure 1.

Figure 12 shows an alternative embodiment of a vehicle instrument panel 100 in accordance with the present invention. The instrument panel 100 includes the instrument panel cover 16 disposed adjacent to the substrate 22. The instrument panel cover 16 is formed and receives scores 20 to create the deployment area 18 as taught above with reference to Figures 3-5. The substrate 22 is manufactured with the scores 19 in the deployment region 18 in a separate injection molding process. The instrument panel 100 is assembled by adhering the inner surface 24 of the instrument panel cover 16 to the substrate 22 in a device 150 known in the art. The device 150 may be, for example, a vacuum cladding device or any device suitable for adhering the instrument panel cover 16 with the substrate 22 to form the instrument panel 100.

Referring to Figures 5 and 12. It will be understood that the plug assist 40 may be unnecessary in the formation of some vehicle instrument panel covers 16 and that the present invention is not limited to the those instrument panel covers 16 that utilize the plug assist 40 in their manufacture. Where the manufacture of an instrument panel cover 16 does not utilize the plug assist 40, the cylinder 42 may be disposed upon the rack 38 or upon some other suitable housing proximate the instrument panel cover 16 so that the cylinder 42 may be used in accordance with the method of the present invention. The plug assist 40 may be utilized in the device 28, even where its presence is not required to form the instrument panel cover 16, to mount the cylinder thereupon to facilitate in-process scoring of the instrument panel cover 16 as taught herein.

The present invention eliminates the need of a secondary operation of scoring the air bag door seam in the instrument panel composite skin and a finished instrument panel part is obtained from the foaming process. Other advantages are that the elimination of the secondary scoring operation is eliminated and hence a cost benefit is realized. The process can also use an in-process thinned-out retainer to eliminate the scoring of the retainer as a secondary operation as well. The process eliminates read-through of the air bag seam on the Class A surface of the instrument panel skin and hence gives a high quality part. The Class A surface of the instrument panel skin is the surface which faces the passenger compartment and is desired to be smooth and free of defects. Also, the scoring process is in-process which gives consistent seam position and depth of the seam and thus gives consistent performance.

It will be understood that a person skilled in the art may make modifications to the preferred embodiment shown herein within the scope and intent of the claims. While the present invention has been described as carried out in a specific embodiment thereof, it is not intended to be limited thereby but is intended to cover the invention broadly within the scope and spirit of the claims.

## Claims

1. An instrument panel cover (16) for use in an instrument panel (10) of a vehicle compartment (12) having a supplemental inflatable restraint (SIR) system (32), the instrument panel cover (16) comprising:
a body having an inner surface (24) and an opposing outer surface (26), the body having an air bag cushion deployment region (18) formed in the inner surface (24) thereof, the deployment region (18) being defined by at least one score (20) formed in the inner surface (24) to a predetermined depth, wherein the at least one score (20) is formed by at least one scoring device (28) which contacts the instrument panel cover (16) during the manufacture of the body so as to form the at least one score (20) in the inner surface (24).

2. The instrument panel cover (16) as set forth in claim 1, wherein the deployment region (18) includes a plurality of scores (20) arranged in the shape selected from the group consisting of U-shaped, H-shaped, V-shaped, C-shaped, Y-shaped and I-shaped.

3. The instrument panel cover (16) as set forth in claim 1, wherein the deployment region (18) comprises a weakened portion of the instrument panel cover (16) which separates under pressure generated by an inflating air bag cushion (32) which is positioned proximate the inner surface (24) of the instrument panel cover (16).

4. The instrument panel cover (16) as set forth in claim 1, wherein the instrument panel cover (16) is formed of a synthetic material.

5. The instrument panel cover (16) as set forth in claim 1, wherein the instrument panel cover (16) is formed of a thermoplastic material selected from the group consisting of a polyethylene based polyolefin elastomer and a polypropylene based thermoplastic elastomer.

6. The instrument panel cover (16) as set forth in claim 1, wherein the at least one scoring device (28) contacts the instrument panel cover (16) in-process at an elevated temperature prior to the setting of the instrument panel cover (16) to form the at least one score (20) therein.

7. The instrument panel cover (16) as set forth in claim 1, wherein the at least one score (20) is formed by advancing a contact edge (43) of the at least one scoring device (28) into the inner surface (24) of the instrument panel cover (16) a predetermined distance toward the outer surface (26), the instrument panel cover (16) being disposed in a mold device (30).

8. The instrument panel cover (16) as set forth in claim 7, wherein the mold device (30) comprises a female vacuum forming tool.

9. The instrument panel cover (16) as set forth in claim 7, wherein the predetermined distance of the at least one score (20) is controlled by limiting the advancement of the at least one scoring device (28) into the instrument panel cover (16) at the inner surface (24).

10. The instrument panel cover (16) as set forth in claim 1, wherein the at least one scoring device (28) comprises a scoring blade (43) which forms apart of a moveable cylinder (42), the at least one scoring blade (43) being expendable and retractable relative to the cylinder (42), the cylinder (42) and at least one scoring blade (43) being orientated above the body so that upon actuation thereof, the cylinder (42) and at least one scoring blade (43) are lowered to contact the body and form the at least one score (20).

11. The instrument panel cover (16) as set forth in claim 10, wherein the at least one scoring blade (43) contacts the instrument panel cover (16) to form the at least one score (20) when the instrument panel cover (16) is at an elevated temperature and deformable.

12. A method of forming a hidden, integral passenger air bag door in an instrument panel cover (16), the method comprising:
forming the instrument panel cover (16) having an inner surface (24) and an opposing outer surface (26), and
forming a deployment region (18) in the inner surface (24) of the instrument panel cover (16) by contacting the inner surface (24) with at least one scoring device (28) during the formation of the instrument panel cover (16) creating at least one score (20) therein, the at least one score (20) defining the deployment region (18) and providing a weakened tear pattern in the inner surface (24) so that deployment of an air bag cushion (32) causes the deployment region (18) to open along the at least one score (20) for deployment of the air bag cushion (32).

13. The method as set forth in claim 12, wherein forming the deployment region (18) comprises:
providing at least one scoring member (43) which is expendable and retractable upon actuation of the device (28);
contacting the at least one scoring member (43) with the instrument panel cover (16) at the inner surface (24) thereof during the formation of the instrument panel cover (16); and
forming the at least one score (20) by advancing the at least one scoring member (43) into the instrument panel cover (16) from the inner surface (24) thereof, the advancement of the at least one scoring member (43) causing the instrument panel cover (16) to thin out in predetermined locations which define the at least one score (20).

14. The method as set forth in claim 13, wherein the device (28) includes a female vacuum forming tool (30).

15. The method as set forth in claim 13, wherein the instrument panel cover (16) is formed of a synthetic material.

16. The method as set forth in claim 13, wherein the deployment region (18) has a shape selected from the group consisting of U-shaped, H-shaped, V-shaped, C-shaped, Y-shaped and I-shaped.

17. The method as set forth in claim 13, wherein the at least one scoring member (43) is disposed upon a cylinder (42) which is actuated by an adjustment system (44) for maneuvering the at least one scoring member (43) relative the instrument panel cover (16).

18. The method as set forth in claim 17, wherein the adjustment system (44) is pneumatic and is controlled by an operator.

19. The method as set forth in claim 17, wherein the adjustment system (44) includes a pneumatic power source and a selector switch (48) for operation thereof.

20. The method as set forth in claim 17, wherein the adjustment system (44) is operated automatically by a controller device (49).

21. An instrument panel (10) for use in a vehicle compartment (12) having a supplemental inflatable restraint (SIR) system (32), the instrument panel (10) comprising:
a substrate (22) having an inner surface and an opposing outer surface, the substrate having an air bag cushion deployment region (18) formed in the inner surface thereof during the formation of the substrate (22);
an instrument panel cover (16) having an inner surface (24) and an opposing outer surface (26), the instrument panel cover (16) having an air bag cushion deployment region (18) formed in the inner surface (24) thereof, the deployment region (18) being defined by at least one score (20) formed in the inner surface to a predetermined depth, wherein the at least one score is formed by at least one scoring member (43) which contacts the instrument panel cover (16) during the formation thereof, wherein advancement of the at least one scoring member (43) causes the instrument panel cover (16) to thin out in predetermined locations which define the at least one score (20),
wherein the cover (16) is disposed adjacent to the substrate (22).

22. The instrument panel as set in claim 21, further comprising:
a foam layer (21) disposed between the substrate (22) and the instrument panel cover (16).
